# EUROPÄISCHE PATENTANMELDUNG

(11) **EP 1 384 641 A1**
(43) Veröffentlichungstag der Anmeldung: **28.01.2004**
(21) Anmeldenummer: 03014951.2
(22) Anmeldetag: 01.07.2003
(51) Int. Cl.: B62B 3/06, B60L 1/00, H02M 3/142

(54) **Flurförderzeug mit einem elektrischen Antrieb**

(30) Priorität: 23.07.2002 DE 10233443
(71) Anmelder: STILL GMBH, D-22113 Hamburg (DE)
(72) Erfinder: Fromme, Georg, Dr., 22145 Hamburg (DE); Neuf, Ottmar, 21465 Reinbek (DE)
(74) Vertreter: Lang, Michael

(57) **Zusammenfassung**

Gegenstand der Erfindung ist ein Flurförderzeug mit einer Spannungsversorgung (1), einer Steuerelektronik (2) und einem elektrischen Antrieb (4). Das Flurförderzeug kann mit Spannungsquellen (1) unterschiedlicher Nennspannung betrieben werden. Insbesondere können Spannungsquellen (1) mit einer Nennspannung zwischen 12 V und 120V verwendet werden. Als Spannungsquelle (1) können insbesondere Batterien oder Brennstoffzellen verwendet werden. Das Flurförderzeug weist Aufnahmevorrichtungen für Spannungsquellen (1) unterschiedlicher Nennspamnnungen auf.

## Beschreibung

Die Erfindung betrifft ein Flurförderzeug mit einer Spannungsversorgung, einer Steuerelektronik und einem elektrischen Antrieb.

Elektrisch angetriebene Flurförderzeuge beziehen ihre Antriebsenergie zumeist aus mitgeführten Spannungsquellen. Über eine Leistungselektronik werden die wesentlichen Verbraucher, in der Regel Elektromotoren beispielweise zum Fahrantrieb des Flurförderzeugs sowie auch zum Antrieb von Hydraulikpumpen, versorgt und gesteuert Als mitgeführte Spannungsquellen können sowohl Batterien als auch Brennstoffzellen verwendet werden. Die Spannung dieser Quellen wird in Abhängigkeit von den Betriebsanforderungen, insbesondere der geforderten Leistung, gewählt. Bei Batterien beispielsweise geschieht dies durch eine Reihenschaltung von einzelnen Zellen mit jeweils 2 V Ausgangsspannung, wodurch sich ein weiter Bereich an möglichen Nennspannungen ergibt. Im Hinblick auf die auftretenden Ströme werden bei hohen Leistungen hohe Spannungen, bei geringeren Leistungen niedrigere Spannungen verwendet.

Im Verlauf der technischen Entwicklung haben sich dabei für die unterschiedlichen Leistungsklassen und durch länderspezifische Gewohnheiten gewisse Standardwerte der Nennspannung für die verwendeten Spannungsquellen ergeben. Im Wesentlichen sind dies die Spannungsstufen von 24 V, 48 V und 80 V. Heutige Steuerelektronik-Komponenten decken üblicherweise ausgehend von einer bestimmten Nennspannung einen eng begrenzten Spannungsbereich ab, innerhalb dessen der sichere Betrieb gewährleistet ist. Dieser Bereich ist so gewählt, dass einerseits bei einem betriebsbedingten Abfall der Spannung an der Spannungsquelle unter die Nennspannung, verursacht beispielsweise durch den fortschreitenden Entladevorgang oder durch Alterungsvorgänge in der Batterie, die Funktionsfähigkeit gewährleistet ist, andererseits aber auch bei Bremsvorgängen eine Rückspeisung von Energie in die Batterie, was eine höhere Spannung als die Nennspannung bedingt, ermöglicht wird. Im Fall zu niedriger Spannung ist dies durch die Norm EN 1175-1 geregelt, die als Mindestspannung das 0,7-fache der Batterienennspannung vorsieht. Bei der Batterie-Rückspeisung wird eine Spannung von mindestens der 1,5-fachen Batterienennspannung als erforderlich angesehen.

Die Einteilung der Batterien und der Flurförderzeuge in unterschiedliche Klassen basierend auf der Betriebsspannung führte zu einer Diversifizierung der Abmessungen der Spannungsquellen. Bei Verwendung von Flurförderzeugen mit unterschiedlichen Batterienennspannungen und -bauausführungen in einer Betriebsstätte ist es notwendig, für die unterschiedlichen Batterietypen Einrichtungen wie Ladestationen und Wechselbatterien in den .unterschiedlichen Spannungsstufen und für die unterschiedlichen Bauformen vorzuhalten. Dies bedeutet einen hohen baulichen und logistischen Aufwand und erheblichen Platzbedarf. Die Anschaffung neuer Flurförderzeuge, deren Spannungsquellen andere Nennspannungen als die der bereits vorhandenen Flurförderzeuge ausweisen, erfordert erhebliche zusätzliche Investitionen in neue Ladestationen und Wechselbatterien.

Der Erfindung liegt daher die Aufgabe zugrunde, ein Flurförderzeug mit einem elektrischen Antrieb zur Verfügung zu stellen, durch das der Aufwand, der sich beim Betrieb einer Flotte von Flurförderzeugen mit unterschiedlichen Leistungsklassen aus der Bereitstellung von Spannungsquellen unterschiedlicher Nennspannung ergibt, reduziert wird.

Diese Aufgabe wird erfindungsgemäß dadurch gelöst, dass ein Flurförderzeug mit einer Spannungsversorgung, einer Steuerelektronik und einem elektrischen Antrieb mit Spannungsquellen verschiedener Nennspannungen betrieben werden kann.

Durch den möglichen Betrieb des Flurförderzeugs mit Spannungsquellen unterschiedlicher Nennspannungen wird die Integration in eine vorhandene Flotte von Flurförderzeugen wesentlich erleichtert, da keine Neuanschaffungen bei Batterien und Ladestationen nötig sind. Besonders vorteilhaft lässt sich dies erreichen, indem die Steuerelektronik und/oder der Antrieb so ausgeführt sind, dass diese mit unterschiedlichen Nennspannungen betreibbar sind.

Besonders vorteilhaft ist es, wenn der mögliche Bereich der Nennspannungen zwischen 12 V und 120 V liegt, da die gängigen Spannungsquellen Nennspannungen innerhalb dieses Bereichs liefern.

Aufgrund der verbreiteten Batterienennspannung von 24 Volt ist es vorteilhaft, wenn der Betrieb mit einer Spannungsquelle dieser Nennspannung möglich ist.

Weiterhin ist es vorteilhaft, das Flurförderzeug mit einer Spannungsquelle der Nennspannung von 48 V betreiben zu können, da auch dies eine weit verbreitete Batterienennspannung ist.

Ein möglicher Betrieb des Flurförderzeugs mit einer Spannungsquelle von 80 V ist aufgrund des häufigen Gebrauchs von Batterien dieser Nennspannung ebenfalls von Vorteil.

Vorteilhafterweise ist die Verwendung einer Brennstoffzelle in der Spannungsquelle vorgesehen.

In einer weiteren vorteilhaften Ausgestaltung enthält die Spannungsquelle mindestens eine Batterie.

Aufgrund der unterschiedlichen Abmessungen und Anschlussmöglichkeiten der verschiedenen Spannungsquellen ist es besonders vorteilhaft, wenn geeignete Aufnahmevorrichtungen mit entsprechenden Anschlüssen für verschiedene Spannungsquellen vorhanden sind.

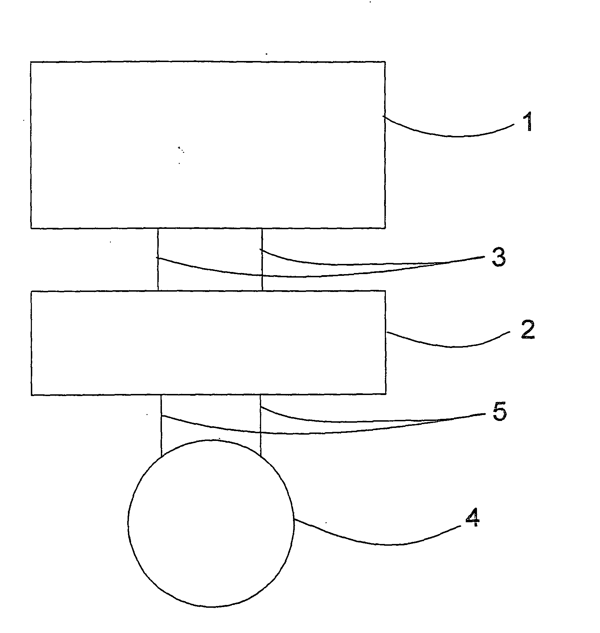

Weitere Vorteile und Einzelheiten werden anhand des in der schematischen Figur dargestellten Ausführungsbeispiels näher erläutert. In der Figur ist eine erfindungsgemäße Anordnung von Spannungsquelle, Steuerelektronik und elektrischem Antrieb eines Flurförderzeugs dargestellt.

Die Spannungsquelle 1 ist mit der Steuerelektronik 2 über die Leitungen 3 verbunden und die Steuerelektronik 2 wiederum mit einem elektrischen Antrieb 4 über entsprechende Leitungen 5.

Die Steuerelektronik 2 dient zur gesteuerten Spannungsversorgung der einzelnen Verbraucher, wie beispielsweise eines Antriebs 4. Die Befehle zur Ansteuerung der einzelnen Verbraucher können sowohl von einem Bediener mittels Bedienelementen wie Bedienhebeln, Pedalen oder Drucktasten, als auch über eine eingebaute Programmsteuerung oder durch externe Signalgeber beispielsweise über Funk oder durch Induktion oder Infrarotsender vorgegeben werden und werden in der Steuerelektronik 2 in ein entsprechendes Spannungssignal für den Verbraucher 4 umgesetzt. Die Steuerelektronik 2 muss nicht als einzelne zentrale Einheit ausgeführt sein, sondern kann insbesondere auch aus mehreren im Flurförderzeug verteilten Einheiten bestehen. Diese können untereinander oder mit einer zentralen Einheit verbunden sein, insbesondere auch über eine serielle Verbindung und ein entsprechendes Bus-System, wie beispielsweise einen CAN-Bus.

Der Antrieb 4 wird in den meisten Fällen aus einem Elektromotor bestehen. Dieser kann beispielsweise zum Fahrantrieb des Flurförderzeugs, aber auch zum Antrieb einer Hydraulikpumpe genutzt werden, die beispielsweise wiederum über Hydraulikzylinder Bewegungsfunktionen des Flurförderzeugs wie Heben und Senken einer Lastgabel ermöglicht. Der elektrische Antrieb kann aber auch direkt diese Funktionen ausführen, beispielsweise über Zahnstangen oder einen Spindeltrieb oder in Form eines Linearmotors. Der Antrieb kann ebenfalls so ausgeführt sein, dass er in einem weiten Spannungsbereich sicher betrieben werden kann.

Die Spannungsquelle 1 kann dabei eine Nennspannung von 12 V bis 120 V besitzen. Die Steuerelektronik gewährleistet entsprechend der Norm EN 1175-1 auch bei einer Eingangsspannung von 8,4 V noch einen sicheren Betrieb, kann aber andererseits bei der Rückspeisung von Energie beim Bremsen auch Spannungen bis mindestens 180 V verarbeiten. Die Leitungen 3 und 5 sind so dimensioniert, dass die dabei auftretenden Ströme sicher übertragen werden können.

Im Hinblick auf die bei Flurförderzeugen weit verbreiteten Nennspannungen von 24 V, 48 V und 80 V ist die Steuerelektronik 2 insbesondere geeignet, einen Betrieb mit diesen Nennspannungen durchzuführen.

In der Spannungsquelle 1 wird in vielen Fällen eine Batterie verwendet werden, aber auch der Einsatz einer Brennstoffzelle ist möglich. Auch eine Kombination beider Systeme oder die Verwendung eines kombinierten Systems aus Verbrennungsmotor und Generator sowie einer oder beider vorgenannter Technologien ist möglich.

Nicht gezeigt ist die Aufnahmevorrichtung des Flurförderzeugs für Spannungsquellen verschiedener Nennspannungen und Ausführungen. Zweckmäßigerweise wird diese so beschaffen sein, dass eine möglichst große Zahl von verschiedenen Spannungsquellen zum Einsatz kommen kann und der zur Verfügung stehende Bauraum optimal genutzt wird, beispielsweise auch durch den Betrieb mehrerer kleiner Spannungsquellen anstelle einer großen. Dazu sind insbesondere passende Halterungen gegen Verrutschen der Spannungsquellen sowie geeignete Anschlüsse für die Leitungen 3 vorzusehen.

## Patentansprüche

1. Flurförderzeug mit einer Spannungsquelle (1), einer Steuerelektronik (2) und einem elektrischen Antrieb (4), **dadurch gekennzeichnet, dass** das Flurförderzeug mit Spannungsquellen (1) verschiedener Nennspannungen betreibbar ist.

2. Flurförderzeug nach Anspruch 1, **dadurch gekennzeichnet, dass** die Steuerelektronik (2) mit Spannungsquellen (1) verschiedener Nennspannungen betreibbar ist

3. Flurförderzeug nach Anspruch 1 oder 2, **dadurch gekennzeichnet, dass** der elektrische Antrieb (4) mit verschiedenen Nennspannungen betreibbar ist.

4. Flurförderzeug nach einem der Ansprüche 1 bis 3, **dadurch gekennzeichnet, dass** die Spannungsquellen (1) eine Nennspannung zwischen 12 V und 120 V besitzen können.

5. Flurförderzeug nach einem der Ansprüche 1 bis 4, **dadurch gekennzeichnet, dass** das Flurförderzeug mit mindestens einer Spannungsquelle (1) mit einer Nennspannung von 24 Volt betreibbar ist.

6. Flurförderzeug nach einem der Ansprüche 1 bis 5, **dadurch gekennzeichnet, dass** das Flurförderzeug mit mindestens einer Spannungsquelle (1) mit einer Nennspannung von 48 Volt betreibbar ist.

7. Flurförderzeug nach einem der Ansprüche 1 bis 6, **dadurch gekennzeichnet, dass** das Flurförderzeug mit mindestens einer Spannungsquelle (1) mit einer Nennspannung von 80 Volt betreibbar ist.

8. Flurförderzeug nach einem der Ansprüche 1 bis 7, **dadurch gekennzeichnet, dass** mindestens eine der Spannungsquellen (1) mindestens eine Brennstoffzelle enthält.

9. Flurförderzeug nach einem der Ansprüche 1 bis 8, **daduch gekennzeichnet, dass** mindestens eine der Spannungsquellen (1) mindestens eine Batterie enthält.

10. Flurförderzeug nach einem der Ansprüche 1 bis 9, **daduch gekennzeichnet, dass** mindestens eine geeignete Aufnahmevorrichtung für Spannungsquellen (1) unterschiedlicher Nennspannungen vorhanden ist.
